Europäisches Patentamt

European Patent Office

Office européen des brevets

(11) Veröffentlichungsnummer : **0 166 768**
**B1**

(12) **EUROPÄISCHE PATENTSCHRIFT**

(45) Veröffentlichungstag der Patentschrift :
26.04.89

(51) Int. Cl.⁴ : **G 01 N 27/56**

(21) Anmeldenummer : 85900454.1

(22) Anmeldetag : 17.12.84

(86) Internationale Anmeldenummer :
**PCT/EP 84/00407**

(87) Internationale Veröffentlichungsnummer :
**WO/8502681 (20.06.85 Gazette 85/14)**

(54) **TRÄGERHÜLSE FÜR MESSKÖPFE.**

(30) Priorität : 16.12.83 DE 3345540

(43) Veröffentlichungstag der Anmeldung :
08.01.86 Patentblatt 86/02

(45) Bekanntmachung des Hinweises auf die Patenterteilung : 26.04.89 Patentblatt 89/17

(84) Benannte Vertragsstaaten :
**BE FR NL**

(56) Entgegenhaltungen :
DE–A– 1 598 560
DE–A– 2 218 227
DE–A– 2 534 108
DE–A– 2 829 724
DE–A– 2 900 069
FR–A– 2 131 286
US–A– 3 719 574
US–A– 3 755 126

(73) Patentinhaber : **Ferrotron Elektronik GmbH**
**Am Schürmannshütt 30**
**D-4130 Moers 1 (DE)**

(72) Erfinder : **RICHTER, Werner**
**Massweg 71**
**D-4150 Krefeld 1 (DE)**
Erfinder : **MACH, Johannes**
**Am Jungbornpark 218**
**D-4130 Moers 3 (DE)**

(74) Vertreter : **Kuborn, Walter et al**
**Patentanwälte Kuborn & Dr. Paigen Mulvanystrasse**
**2**
**D-4000 Düsseldorf (DE)**

**Beschreibung**

Die Erfindung betrifft eine feuerfeste, elektronenleitende Trägerhülse für Meßköpfe zur Ermittlung der Sauerstoffaktivität, insbesondere von Stahlschmelzen, die aus einem Graphit enthaltenden feuerfesten Material, beispielsweise auf der Basis von Korund, Mullit, Schamotte oder dergleichen besteht.

In den Meßköpfen sind jeweils ein Thermoelement sowie eine mit einem Feststoffelektrolyten und einer Vergleichssubstanz ausgestattete Sonde gehalten. An der Sonde tritt eine EMK auf, die gemessen wird und aus der unter Berücksichtigung der Temperatur die Sauerstoffaktivität errechnet werden kann.

Eine Trägerhülse der vorstehend genannten Art, die aus der DE-OS 29 00 069 bekannt ist, taucht bei der Anwendung des Meßkopfes zusammen mit dem Thermoelement und der Sonde in die Schmelze ein, wobei die Trägerhülse eine unmittelbare elektrische Verbindung mit der Schmelze hat und als Ableitelektrode dient. Durch die mindestens 20 Gew.-% Graphit in dem Material der Trägerhülse ergibt sich bei der bekannten Ausführungsform zwar eine elektrische Leitfähigkeit, doch diese ist infolge der verwendeten relativ kleinen, unausgerichteten Graphitpartikel mit den sich ergebenden Unterbrechungen im Feuerfestmaterial unbefriedigend und die ermittelten Meßwerte haben eine zu große Streuung.

Aufgabe der vorliegenden Erfindung ist es, eine Trägerhülse zu schaffen, die eine wesentlich verbesserte elektrische Leitfähigkeit und Meßgenauigkeit sowie eine hervorragende Widerstandsfähigkeit gegen Temperaturwechsel hat.

Diese Aufgabe wird durch die in Anspruch 1 wiedergegebene Erfindung gelöst.

Mit diesen Merkmalen ausgestattete Trägerhülsen haben eine wesentlich verbesserte elektrische Leitfähigkeit, so daß der Meßkopf Meßwerte mit erforderlicher Genauigkeit liefern kann und die Meßwerte verschiedener Meßköpfe hinreichend genau übereinstimmen. Das Zurechtrücken der Graphitplättchen unter Druck führt dazu, daß sie in Stromrichtung aneinanderhängen und ein zusammenhängender elektronenleitender Strompfad gebildet wird. Dazu trägt auch die gleichzeitige Verdichtung der Struktur des von den feuerfesten Basisstoffen gebildeten Gerüstes bei.

Es hat sich auch gezeigt, daß eine solche Trägerhülse beim Eintauchen in das Stahlbad frei von Gasentwicklung ist, welche die Meßwerte verfälschen könnte.

Die Aufgabe wird in ihrem verfahrensmäßigen Aspekt durch die in Anspruch 2 wiedergegebene Erfindung gelöst.

Bei dem halbplastischen Preßvorgang wird die teils mit Wasser, teils mit chemischem Mittel gemischte Masse aus Graphit, feuerfestem Basismaterial und Bindemittel durch den Druckaufbau und die Wandreibung in der Form teilweise thixotrop, wodurch die Ausrichtung der Graphitplättchen und die Verdichtung wirkungsvoll erfolgen können.

In einer ersten Alternative nach Anspruch 3 wird eine keramisch abbindende Masse verwendet.

Eine andere Alternative nach Anspruch 4 verwendet anorganisch chemische Bindemittel, beispielsweise in Form von Monoaluminiumphosphat, die keiner hohen Temperatur zum Aushärten bedürfen, sondern dies im Wege einer chemischen Bindung tun.

Eine weitere Alternative gemäß Anspruch 5 ist der Einsatz organischer Bindemittel, beispielsweise in der Form von Phenolharz.

Überraschenderweise hat sich bei den kaltabbindenden Varianten eine weitere Verbesserung der elektrischen Leitfähigkeit ergeben. Bei letzteren wurde ein elektrischer Widerstand der Trägerhülse von nur 2 Ohm erzielt.

In näherer Ausbildung ist die Erfindung gekennzeichnet durch die Anwendung eines Graphits mit einer Plättchengröße von 200 bis 600 μm bei etwa hälftiger Aufteilung der feuerfesten Basisstoffe in Körnungsfraktion bis 0,1 und bis 0,5 mm (Anspruch 6).

Dadurch läßt sich eine lagen- bzw. schichtenfreie Verpressung der Masse bei optimaler Dichte und Leitfähigkeit der Trägerhülse erreichen. Größere Körnungen der feuerfesten Basisstoffe sowie kleinere und größere Plättchen des Graphits würden die elektrische Leitfähigkeit abrupt negativ beeinflussen.

In manchen Fällen, besonders bei keramischer Bindung, ist es zweckmäßig, im Material der Trägerhülse bis 10 Gew.-% Si-Metall in der Korngröße bis 0,04 mm vorzusehen (Anspruch 7).

Das hat den Vorteil einer weiteren keramischen Verfestigung der Hülse durch die Umwandlung von Si-Metall und Kohlenstoff in SiC.

Gemäß Anspruch 8 kann in der Preßmasse der Trägerhülse bis 0,5 Gew.-% Plastifizierungsmittel vorgesehen sein.

Damit kann die erforderliche Plastizität der Masse auch bei einem geringeren Anteil an keramischem Bindemittel, beispielsweise an Bindeton und Bentonit, gehalten und die Temperaturwechselbeständigkeit günstig beeinflußt werden. Das Plastifizierungsmittel, das ein modifiziertes Polysaccharid sein kann, wird vorteilhaft in 2-%iger Lösung dem Pulver zugesetzt.

Ferner kann die Preßmasse bis 0,3 Gew.-% eines Benetzungsmittels aufweisen (Anspruch 9), beispielsweise auf der Basis von Nonylphenolpolyglycoläther, um die Vermischung der wasserabweisenden Graphitplättchen mit den tonigen Bestandteilen des Versatzes zu erleichtern.

Im Hinblick auf die bei der plastischen Pressung gleichzeitig stattfindende Querschnittsverengung hat es sich als vorteilhaft erwiesen, die Druckfläche bei stetigem Druckaufbau im Verhältnis von 4 cm$^2$ auf 1 cm$^2$ zu verringern (Anspruch 10).

Dadurch werden bei einem Preßdruck von etwa 400 bar die Graphitplättchen in hohem Maß ausgerichtet und ergibt sich eine relativ lange zusammenhängende Elektronenleitungsstrecke.

Nachstehend ist anhand einer schematischen Zeichnung die Anordnung und Funktion einer erfindungsgemäßen Trägerhülse für einen Meßkopf beschrieben.

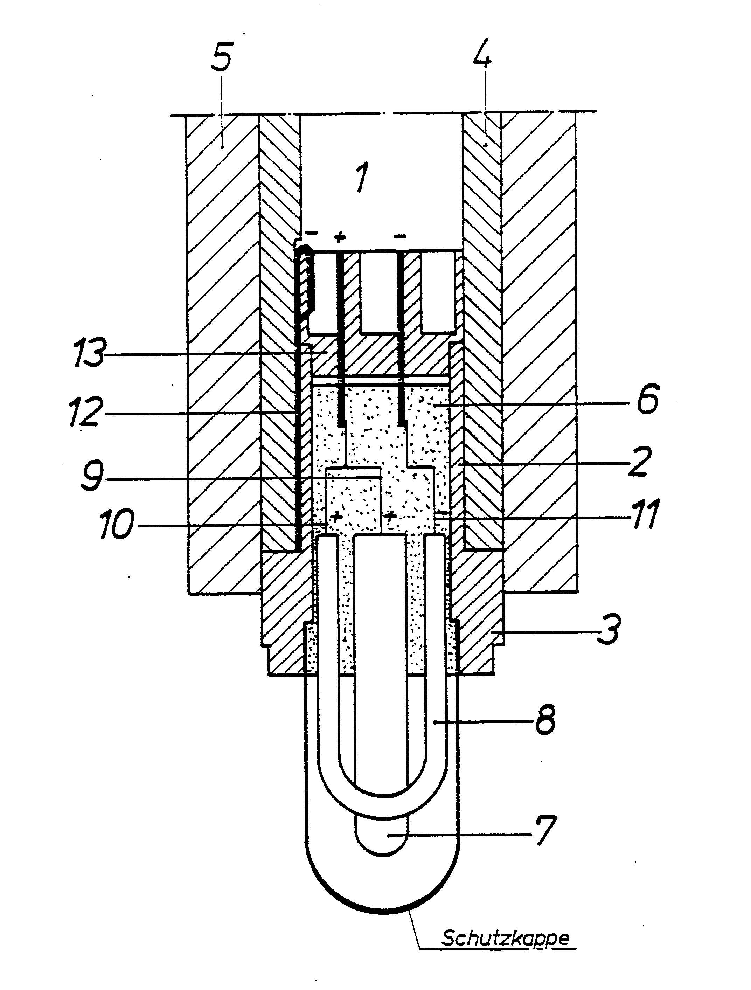

In der Zeichnung bedeutet 1 den Meßkopf als Ganzes, der als tragenden Teil eine Trägerhülse 2 mit einem Bund 3 aufweist, zwecks Abstützung einer auf die Trägerhülse 2 aufgeschobenen, aus dickwandigem Karton bestehenden hohlen Lanze 4, mit der der Meßkopf gehandhabt bzw. in die Schmelze eingetaucht wird. Im eintauchenden Bereich ist die Lanze 4 mit einem feuerfesten Rohr 5 verkleidet, das die stirnseitige Stoßstelle der Lanze 4 zur Trägerhülse 2 abdeckt und den Bund teilweise übergreift.

Im Innern der Trägerhülse 2 sind in einer feuerfesten Masse 6 eine feuerfeste mit einer Vergleichssubstanz und einem Feststoffelektrolyten ausgerüstete Sonde 7 sowie ein quarzumhülltes U-förmiges Thermoelement 8 befestigt, die beide über die freie Stirnseite des Bundes 3 der Trägerhülse 2 hinausragen und an den eingelagerten Enden mit Kontaktdrähten 9, 10 und 11 verbunden sind. Die Trägerhülse 2 ist ebenfalls mit einem Kontaktdraht 12 versehen. Alle Drähte 9 bis 12 führen zu einer elektrischen Anschlußbasis 13 aus nichtleitendem Material, an die in nicht dargestellter Weise ein Stecker mit Zuleitungen zu Meßgeräten angeschlossen werden kann, mit Hilfe derer die Sauerstoffaktivität einer Schmelze bestimmbar ist. Es ist ersichtlich, daß die Trägerhülse 2, die sowohl als Gehäuse zum Aufnehmen und Haltern wichtiger Einzelteile des Meßkopfes 1 und zudem als Badelektrode dient, neben außergewöhnlichen feuerfesten Eigenschaften auch eine gute elektrische Leitfähigkeit besitzen muß, um eine betriebssichere Funktion des Meßkopfes 1 zu gewährleisten.

Beispielsweise Preßmassen zur Herstellung von Trägerhülsen 2 sind nachstehend angegeben :

a) Keramisch abbindende Masse :

20-30 Gew.-% Graphit
5-8 Gew.-% Tonschlicker
5-10 Gew.-% Bindeton, einschl. Bentonit
0,05-0,2 Gew.-% Netzmittel
0,1-0,4 Gew.-% Plastifizierungsmittel
8-10 Gew.-% Wasser
und als Rest feuerfestes Material.

b) Organische und chemisch abbinde Massen :
20-30 Gew.-% Graphit
bis 10 Gew.-% Bindemittel/Ton, Tonschlicker, Bentonit
0,05- 0,2 Gew.-% Netzmittel
2-5 Gew.-% eines organischen Binders, z. B. Melasse oder Dextrin oder
3-6 Gew.-% Monoaluminiumphosphat oder eines Gemisches aus
je 3-6 Gew.-% Phosphorsäure u. Monoaluminiumphosphat
und als Rest feuerfestes Material.

**Patentansprüche**

1. Feuerfeste, elektronenleitfähige Trägerhülse für Meßköpfe zur Ermittlung der Sauerstoffaktivität, insbesondere von Stahlschmelzen, die aus einer über 20 Gew.-% Graphit und keramische Bindemittel enthaltenden feuerfesten Masse, beispielsweise auf der Basis von Korund, Mullit, Schamotte oder dergleichen besteht, dadurch gekennzeichnet, daß der Graphit in Gestalt von wenigstens 200 μm großen Graphitplättchen vorliegt, die eine durch Pressen erreichte einheitliche Ausrichtung aufweisen.

2. Verfahren zur Herstellung einer Trägerhülse nach Anspruch 1, dadurch gekennzeichnet, daß ein Graphit aus wenigstens 200 μm großen Graphitplättchen verwendet und die Trägerhülse (2) halbplastisch unter Querschnittsverringerung bei wenigstens 400 bar gepreßt und dadurch eine einheitliche Ausrichtung der Graphitplättchen erreicht wird.

3. Verfahren nach Anspruch 2, dadurch gekennzeichnet, daß bei einer keramisch abbindenden Masse nach Brennen bei wenigstens 1200 °C eine Kaltdruckfestigkeit von wenigstens 300 bar erzielt wird.

4. Verfahren nach Anspruch 2, dadurch gekennzeichnet, daß 2 bis 8 Gew.-% anorganischchemische Bindemittel verwendet werden und die Kaltdruckfestigkeit nach dem Tempern bei wenigstens 250°C wenigstens 300 bar beträgt.

5. Verfahren nach Anspruch 2, dadurch gekennzeichnet, daß 2 bis 5 Gew.-% organische Bindemittel verwendet werden und die Kaltdruckfestigkeit nach Trocknen bei wenigstens 100 °C wenigstens 300 bar beträgt.

6. Verfahren nach einem der Ansprüche 2 bis 5, gekennzeichnet, durch die Anwendung eines Graphits mit einer Plättchengröße von 200 bis 600 μm bei etwa hälftiger Aufteilung der feuerfesten Basisstoffe in Körnungsfraktionen bis 0,1 und bis 0,5 mm.

7. Verfahren nach einem der Ansprüche 2 bis 6, dadurch gekennzeichnet, daß bis 10 Gew.-% Si-Metall in Korngrößen bis 0,04 mm verwendet werden.

8. Verfahren nach einem der Ansprüche 2 bis 7, dadurch gekennzeichnet, daß die Preßmasse der Trägerhülse (2) bis 0,5 Gew.-% Plastifizierungsmittel aufweist.

9. Verfahren nach einem der Ansprüche 2 bis 8, dadurch gekennzeichnet, daß die Preßmasse der Trägerhülse (2) bis 0,3 Gew.-% Benetzungsmittel aufweist.

10. Verfahren nach einem der Ansprüche 2 bis 9, gekennzeichnet durch einen beim halbplastischen Preßvorgang im Verhältnis von 4 auf 1 verringerten Querschnitt.

**Claims**

1. Refractory electrically-conducting carrier sleeve for measuring heads for determining the oxygen activity, especially of steel melts, which comprises a refractory mass containing more than 20 % by weight of graphite and ceramic binder, for example based on corundum, mullite, chamotte or the like, characterised in that the graphite is present in the form of graphite platelets of at least 200 micrometres in size, having a unitary orientation achieved by pressing.

2. Method of manufacturing a carrier sleeve according to claim 1 characterised in that a graphite of at least 200 micrometre graphite platelets is used and the carrier sleeve (2) is pressed in semi-plastic form with a reduction of cross-section at least 400 bar, and thereby a unitary orientation of the graphite platelets is achieved.

3. Method according to claim 2 characterised in that, with a ceramic binding mass, after firing at at least 1200 °C a cold pressure strength of at least 300 bar is achieved.

4. Method according to claim 2 characterised in that 2 to 8 percent by weight of inorganic chemical binder is used and the cold pressure strength after tempering at at least 250 °C amounts to at least 300 bar.

5. Method according to claim 2 characterised in that 2 to 5 percent by weight of organic binder is used and the cold pressure strength after drying at at least 100 °C amounts to at least 300 bar.

6. Method according to one of claims 2 to 5 characterised by the use of a graphite having a platelet size of 200 to 600 micrometres with about half the distribution of the refractory base material in grain fractions up to 0.1 and up to 0.5 mm.

7. Method according to one of claims 2 to 6 characterised in that up to 10 percent by weight of silicon metal is used, having a grain size up to 0.04 mm.

8. Method according to one of claims 2 to 7 characterised in that the pressed mass of the carrier sleeve (2) has up to 0.5 percent by weight of plasticising medium.

9. Method according to one of claims 2 to 8 characterised in that the pressed mass of the carrier sleeve (2) comprises up to 0.3 percent by weight of cross-linking medium.

10. Method according to one of claims 2 to 9 characterised by a 4 to 1 reduction in cross-section in a semi-plastic pressing process.

**Revendications**

1. Douille de protection, réfractaire, conductrice d'électrons pour des têtes de mesure déterminant l'activité en oxygène, notamment dans des bains d'acier fondus, douille formée d'une masse réfractaire contenant plus de 20 % en poids de graphite et d'un liant céramique, par exemple à base de corindon, de mullite, de schamotte, ou analogue, caractérisée en ce que le graphite est présent sous la forme de plaquettes de graphite d'une dimension au moins égale à 200 μ, et qui sont alignées de manière uniforme par pressage.

2. Procédé de fabrication d'une douille de support selon la revendication 1, caractérisé en ce qu'on utilise un graphite comprenant des plaquettes de graphite d'une dimension au moins égale à 200 μ et la douille de support (2) est pressée de manière semi-plastique avec une réduction de section sous au moins 400 bars donnant ainsi un alignement uniforme des plaquettes de graphite.

3. Procédé selon la revendication 2, caractérisé en ce que pour une masse à réaction céramique, après une cuisson à au moins 1200° C, on arrive à une résistance à la compression à froid d'au moins 300 bars.

4. Procédé selon la revendication 2, caractérisé en ce que l'on utilise entre 2 et 8 % d'un liant chimique inorganique et la résistance à la compression à froid après trempe, à au moins 250 °C est au moins égale à 300 bars.

5. Procédé selon la revendication 2, caractérisé en ce que l'on utilise entre 2 et 5 % d'un liant organique et la résistance à la compression à froid après séchage à au moins 100 °C est égale à au moins à 300 bars.

6. Procédé selon l'une des revendications 2 à 5, caractérisé en ce qu'on utilise du graphite ayant une dimension de plaquette comprise entre 200 et 600 μ pour une répartition par moitié des matériaux de base réfractaires en des fractions de granulométrie comprises entre 0,1 et 0,5 mm.

7. Procédé selon l'une des revendications 2 à 6, caractérisé en ce qu'on utilise jusque 10 % en poids de Si métallique avec une granulométrie allant jusqu'à 0,04 mm.

8. Procédé selon l'une des revendications 2 à 7, caractérisé en ce que la masse pressée de la douille de support (2) comporte jusqu'à 0,5 % en poids d'un agent de plastification.

9. Procédé selon l'une des revendications 2 à 8, caractérisé en ce que la masse pressée de la douille de support (2) contient jusqu'à 0,3 % en poids d'un agent mouillant.

10. Procédé selon l'une des revendications 2 à 9, caractérisé par une opération de pressage semi-plastique donnant une réduction de section de 4 à 1.

5

4

1

− + −

13

12

6

9

2

10

11

3

8

7

Schutzkappe